# EUROPEAN PATENT SPECIFICATION

(11) **EP 4 529 611 B1**
(45) Date of publication and mention of the grant of the patent: **04.02.2026**
(21) Application number: 23726572.3
(22) Date of filing: 17.05.2023
(51) Int. Cl.: G01G 19/393

(54) **METHODS OF IDENTIFYING DEFECTIVE DISPERSION FEEDERS**
VERFAHREN ZUR IDENTIFIZIERUNG DEFEKTER DISPERSIONSZUFÜHRER
PROCÉDÉS D'IDENTIFICATION DE DISTRIBUTEURS PAR DISPERSION DÉFECTUEUX

(30) Priority: 23.05.2022 GB 202207497
(43) Date of publication of application: 02.04.2025
(73) Proprietor: Ishida Europe Limited, Birmingham, West Midlands B32 3DB (GB)
(72) Inventor: HODGSON, Ian, Birmingham West Midlands B32 3DB (GB)
(74) Representative: Gill Jennings & Every LLP
(86) International application number: PCT/GB2023/051293
(87) International publication number: WO 2023/227863

(56) References cited:
- WO-A1-2013/137008
- JP-B2- 6 676 503
- US-B2- 10 919 706

## Description

### FIELD OF THE INVENTION

The invention relates to methods of identifying defective dispersion feeders in systems suitable for supplying food product from a supply position to a plurality of batch measuring units. In particular, the invention relates methods performed in systems which feed food product to separate measuring units to form partial batches of food product, which may then be combined into batches fulfilling predetermined criteria, such as predetermined weight criteria.

### BACKGROUND TO THE INVENTION

In the formation of packages of food product, such as bags of potato crisps or chips or trays of meat or poultry, many production lines involve the use of a feeder system that receives a supply of food product in bulk and feeds this product to a plurality of measuring units that measure out partial batches of that food product. Such systems are often referred to as dispersion feeder systems and may be incorporated as part of a system that combines the partial batches of product into complete batches meeting pre-set criteria. An example of a system that may form batches in this way would be a computer combination weigher (CCW).

A CCW is typically employed to form batches of food product having predetermined criteria as to weight by identifying a suitable combination of two or more partial batches measured by the measuring units and dispensing these partial batches so that they can be packaged together. For example, a CCW may be set to form batches of potato crisps having a weight of 30 grams, and will look for weight combinations from the measuring units that add up to approximately 30 grams.

As these feeder systems operate, they can become less efficient as they become dirty. For example, feeders supplying food product coated in flavouring can become covered in flavouring, which can impede the operation of the feeder. In some systems, the product is supplied to the system based on measurements made of the product located at the dispersion feeder. However, as the dispersion feeder becomes dirty, this can affect the accuracy of the measurements and so lead to an inefficient supply of product. For example, in cases in which the weight of the product at the dispersion feeder is measured, the accumulated dirt can begin to account for a significant fraction of the measured weight of product at the dispersion feeder, which leads the system to believe there is significantly more product on the dispersion feeder than there is. This can cause the dispersion feeder to be undersupplied with product, dramatically reducing the efficiency of the entire system.

Notable prior art documentation comprises patent documents JP 6 676503 B2, US 10 919 706 B2 and WO 2013 137008 A1.

An aim of the invention is to provide a method of identifying a defective dispersion feeder on one of these systems in order to combat operational inefficiencies.

### SUMMARY OF THE INVENTION

In accordance with a first aspect of the present invention, there is provided a method of identifying a defective dispersion feeder in a system suitable for supplying food product from a supply position to a plurality of batch measuring units, the method comprising; supplying product to a dispersion feeder configured to receive product at the supply position and distribute the product towards each of the plurality of batch measuring units; operating the dispersion feeder to distribute the product towards each of the plurality of batch measuring units; repeatedly measuring the amount of product at the dispersion feeder using a dispersion feeder measuring unit and supplying additional product to the dispersion feeder based on said measurements; receiving product in at least some of the plurality of batch measuring units; measuring the product received in the plurality of batch measuring units; outputting an indication that the dispersion feeder is defective based on the measurements of the product received in the plurality of batch measuring units.

The invention provides a technique for identifying a defective dispersion feeder based on the measurements made by batch measuring units. It should be noted here that the identification of a defective dispersion feeder may be either directly or indirectly based on the measurements made by the batch measuring units. For example, the identification of a defective dispersion feeder may be based on the measurement values themselves, or based on one or more outcomes which are themselves based on the measurement values. Some specific examples of indirectly basing the identification on the measurements will be given further below. Additionally, the identification of the defective dispersion feeder may be based only in part on the measurements made by batch measuring units, and may require other criteria being met and examples of this will be discussed further below.

Whereas in a continuously running system the dispersion feeder should ideally never be completely devoid of product, and so incapable of distinguishing between product at the dispersion feeder and gradually accumulated dirt, the batch measuring units will typically empty between measuring successive batches of product, and hence can distinguish between gradual dirt build up and a newly supplied amount of product. Therefore, the status of the dispersion feeder can be inferred more accurately based on the measurements of the batch measuring units without interrupting operation of the system.

As mentioned above, the method involves supplying product to a dispersion feeder. This may be performed by a conveyor located above the dispersion feeder, which is configured to intermittently supply product from bulk to the dispersion feeder.

The dispersion feeder is operated to distribute the product towards each of the plurality of batch measuring units. Here, it should be noted that the dispersion feeder need to provide the product to the batch measuring units. Rather, the dispersion feeder receives the product from bulk at one or more supply positions, and distributes the product towards each of the batch measuring units, the term "towards" meaning the product is advanced downstream in the direction of the respective batch measuring units. The product may be received in intermediate conveyors, for example, each located in a different downstream direction from the dispersion feeder and upstream of the respective batch measuring unit.

The dispersion feeder is configured to repeatedly measure the amount of product at the dispersion feeder using a dispersion feeder measuring unit and supply additional product to the dispersion feeder based on said measurements. The dispersion feeder may substantially continuously measure the amount of product at the dispersion feeder, or may do so periodically, at discrete intervals. Typically, additional product will be supplied to the dispersion feeder if the measurement value passes a threshold, such as a measured weight falling below a threshold weight, but more factors may be included when determining whether to supply additional product, such as the rate of change of the measurements.

Product is received in at least some of the plurality of batch measuring units and measured. As mentioned above, the product may be received via one or more intermediate conveyors or the like. Typically, each of the batch measuring units will receive product during operation of the system and will successively dispense their measured amount of product and receive new product; however, only one or more batch measuring units may receive product on any one cycle of the system, depending on which one or more batch measuring units dispense their measured amount product.

Finally, the method involves outputting an indication that the dispersion feeder is defective based on the measurements of the product received in the plurality of batch measuring units. There are many different ways in which the indication may be output. In preferred cases, which will be discussed below, outputting an indication that the dispersion feeder is defective may involve sending a signal which causes the system to automatically address the defective dispersion feeder. Alternatively, outputting an indication that the dispersion feeder is defective may involve one or more of: outputting a visual indication, such as outputting an indication on a screen of the system or illuminating a light of the system, outputting an audible indication, and ceasing operation of the system.

Typically, each batch measuring unit receives a partial batch of product, and the method further comprises forming one or more batches of product according to predefined criteria, wherein each batch of product is formed by dispensing a plurality of partial batches of product based on the measurements of the product made by the batch measuring units and said predefined criteria. The present invention is particularly applicable in systems which form batches according to predefined criteria, since an inefficient dispersion feeder can slow the rate at which batches can be formed or even prevent the system from forming batches meeting the criteria. While preferred, the method could also be implemented in systems which do not form batches in this way. For example, the method could also be applied in a system which measures and outputs variable sized batches.

Preferably, each batch is formed according to predefined weight criteria. For example, the batch may be formed based on a target minimum weight and/or a target maximum weight. While preferred, in other cases, the batches may be formed based on other criteria, such as predefined volume criteria or criteria relating to the number of products.

In embodiments involving the formation of batches, preferably the method comprises forming a plurality of batches of product according to the predefined criteria, and outputting an indication that the dispersion feeder is defective is based on the rate at which batches are formed meeting the predefined criteria. This is an example of identifying the defective dispersion feeder indirectly based on the measurements of the measuring units. That is, each batch is formed (or not) based on the measurements of the measurement units, and then the system can base the identification of a defective dispersion feeder on the ability of the system to form batches. In the present case, the "rate" may be determined as a function of time, e.g. batches per second, or may be determined as a function of the number of cycles of the system. For example, the throughput of batch forming systems are often determined by the throughput of downstream packaging machines. If a packaging machine is designed to produce one package every second, then the batch forming system will be tasked with supplying a batch of product every second and if it cannot form a batch in time, it may skip that cycle.

In preferred embodiments, each batch is formed according to predefined weight criteria, and outputting an indication that the dispersion feeder is defective is based on the rate (again, either as a function of time or number of machine cycles) at which batches are formed that either fall within or exceed a target weight range. Often batch forming systems will be required to form batches within a predefined weight range, such as from 30 to 32 grams, but may also dispense overweight batches if they cannot dispense a correct batch. Overweight batches often represent giveaway, which means the packaged product has more product than required. Batches are often identified within these systems as "good", meaning they fall within the target weight range, or "overweight" meaning they exceed the target weight range. Some systems may also dispense "underweight" batches, or as noted above, may not dispense a batch at all when supposed to. While only "good" batches are typically considered acceptable, particularly preferred examples of the present system provide a mechanism for determining when the dispersion feeder is undersupplied with product as a result of dirt build up on the dispersion feeder. Hence, the present preferred embodiment looks at the rate at which "good" or "overweight" batches are formed and when this falls below a threshold, it may indicate the system is undersupplied.

In some embodiments, forming each batch comprises identifying a selection of partial batches of product to dispense based on the measurements of the product made by the batch measuring units and said predefined criteria, and preferably outputting an indication that the dispersion feeder is defective is based on the characteristics of the identified selection of partial batches, such as measurements of the dispensed partial batches or the number of partial batches forming the batch of product, for one or more batches of product. This is another example of ways of using the measurements of the measuring units to determine when the dispersion feeder is defective. For example, the system may monitor the average weight of the partial batches that are dispensed. Typically, batch forming systems will operate with a target of dispensing a certain number of partial batches to form each batch. For example, a system forming 30 gram batches may be configured to form these with a target of dispensing three partial batches of about 10 grams each. In this example, when the system is undersupplied, it may have to resort to dispensing four partial batches of about 7.5 grams each. By monitoring the measurements of the dispensed partial batches, it will be possible to see the average measurements of dispensed partial batches decreasing or the average number of partial batches being dispensed per batch increasing. While the above example describes a target of three partial batches of about 10 grams each for simplicity, it is more common for systems to target an average number of partial batches dispensed per batch that is a non-integer number, such as 3.5. This does not mean that only half of a partial batch is dispensed, but rather means that due to the natural variance of the amount of product in the partial batches, the system will have sometimes form batches using three partial batches, and sometimes with four. Nonetheless, monitoring the characteristics of the dispensed partial batches over a series of formed batches provides a good way of determining that the dispersions feeder is defective. It should be noted that, in this case, basing the determination on the measurements of the dispensed partial batches is a way of directly basing this determination on the measurements, while basing this determination on the number of partial batches being dispensed is a way of indirectly basing this determination on the measurements, since the measurements are used to determine how many partial batches must be dispensed.

As mentioned above, batch forming systems are often configured to dispense a batch at predefined intervals or when other criteria are met, and the system may be configured to first decide whether it is capable of forming an acceptable batch. The method may therefore further comprise, before forming each batch, determining whether to form a batch of product based on the measurements of the product received in the plurality of batch measuring units and the predefined criteria, and only form a batch upon a positive determination, and outputting an indication that the dispersion feeder is defective is based on the results of a plurality of determinations. That is, whenever the system is called upon to dispense a batch of product, it may perform a determination based on the measurements of the batches currently available it. If the system can, for example, only dispense underweight or (heavily) overweight batches, it may make a negative determination, i.e. it may decide not to dispense a batch of product and wait for other partial batches to be available to it (such as from those measuring units that dispensed product for a preceding batch). Monitoring the determinations provides another mechanism for determining that the system is undersupplied by a defective dispersion feeder. For example, the rate (again, either as a function of time or system cycles) of positive determinations may fall below a predefined threshold, indicating that the system is running inefficiently.

The present system is particularly applicable to systems that form relatively small batches. This is because relatively small batches require relatively small partial batches, which in turn requires product to be provided into the system via the dispersion feeder at a relatively low rate, and so the amount of product on the dispersion feeder will also be low. In this case, the build-up of dirt on the dispersion feeder can start to account for a substantial fraction of the total target weight for the dispersion feeder. For example, a build-up of dirt weighing 2 grams becomes significant if the dispersion feeder does not call for new product until the weight of product on it drops below 12 grams. Therefore preferably the method comprises forming one or more batches of product according to predefined weight criteria, wherein said predefined weight criteria include a minimum and/or maximum target batch weight of 100 grams or less, preferably 50 grams or less, more preferably 30 grams or less, most preferably 20 grams or less. The target weight may be a minimum and/or a maximum, since it is typical for systems to form batches as close to a minimum weight as possible (i.e. most batches will be low weight with a low minimum target weight), whereas a low maximum target weight will also mean batches are formed with low weight.

As mentioned above, while the system may measure the product by volume or by number of products, it is preferred that the weight of product is measured. Accordingly, it is preferred that the dispersion feeder measuring unit is a weighing unit coupled to the dispersion feeder and configured to measure the weight of the product at the dispersion feeder. For example, the entire dispersion feeder may be mounted on a weighing unit such as a load cell. As mentioned above, the present system is particularly advantageous when the dispersion feeder is configured to hold a low weight of product at any time and so preferably supplying additional product to the dispersion feeder is based on the measured weight of the product at the dispersion feeder falling below a target weight, wherein preferably said target weight is 500 grams or less, preferably 200 grams or less, more preferably 100 grams or less, most preferably 50 grams or less.

In many embodiments, the dispersion feeder is a dispersion table, preferably configured to vibrate and/or rotate to distribute the product towards each of the plurality of batch measuring units. A common type of dispersion table is a generally conical surface, that may receive product in an area around the peak of the conical surface, which then vibrates or rotates so that product is distributed towards the whole circular perimeter of the table. Other types of dispersion feeder may be used, as well as ones with different distribution mechanisms.

Preferably, the system further comprises a plurality of directional feeders, each configured to receive product from the dispersion feeder and transport the product towards at least one of the batch measuring units. Typically, a dispersion feeder will distribute product in each of its dispersion directions at a fixed rate, usually at an equal rate. Therefore, providing directional feeders that receive the product from the dispersion feeder and transport the product towards one of the batch measuring units allows the system to selectively supply product to the required batch measuring units. These directional feeders may be vibratory feeders, which can be in the form of a sloped channel extending from the dispersion feeder towards a batch measuring unit. A directional feeder may feature branches such that, for example, two downstream sections feeding respective batch measuring units branch off from and are supplied by one common upstream section receiving product from the dispersion feeder. Alternatively, each directional feeder may transport the product towards only one of the batch measuring units. Preferably, the plurality of directional feeders are radial feeders, preferably vibratory radial feeders. Radial feeders are commonly used with a conical dispersion table, and transport the product in different radial directions with respect to a centre of the system, which typically corresponds to the supply position.

As mentioned previously, the dispersion feeder or the directional feeders do not necessarily provide the product into the measuring units. In some cases, the a respective pool hopper is located between the dispersion feeder and each batch measuring unit, said pool hopper arranged to receive product from the dispersion feeder and preferably dispense the received product into the respective batch measuring unit, although one or more additional pool hoppers could also be provided between the pool hopper and measuring units. The batch measuring units also do not need to directly dispense the product from the system. Each batch measuring unit could dispense product into a respective pool hopper, in which case, the measurement relating to that batch is tracked through the system, and the product will then be dispensed from the pool hopper, such as to form a batch, based on the measurements made by the measurement unit.

Preferably, each batch measuring unit comprises a hopper configured to receive and hold product for measuring and further configured to dispense the received product. For example, the each batch measuring unit may be a swinging door hopper, comprising at least one door that moves between an open and a closed position, such as by pivoting about a hinge. The batch measuring hopper may be a weighing hopper, configured to measure the weight of product received in the hopper. For example, each batch measuring hopper may be mounted on a respective load cell. However, the hopper could also be configured to measure product volumetrically, for example.

There are a number of ways that a dispersion feeder system can use an output indication that the dispersion feeder is defective and some of these will be discussed below.

Some embodiments comprise adjusting one or more operating parameters of the dispersion feeder in response to an indication that the dispersion feeder is defective. The operating parameters may be any of the system settings that influence the throughput of product. For example, the operating parameters may be adjusted to increase the rate at which product is distributed by the dispersion feeder. This may compensate for any error in the measurements made by the dispersion feeder. The operation parameters may include one or more of: a vibration amplitude, a vibration frequency, a vibration time, a rotation speed, a rotation time, and/or a rate of change of direction of rotation of the dispersion feeder. The "vibration time" and "rotation time" parameters would include any parameter that controls the amount of time that the feeder vibrates or rotates. For example, the vibration or rotation time may be implemented as a continuous period of vibration or rotation whose length may be adjusted, e.g. 1 second or 2 seconds of continuous vibration/rotation, or the vibration or rotation time may be implemented as a variation of a duty cycle over a predetermined feed period, e.g. vibrating/rotating for 50% of the two second feed period or 75% of the two second feed period.

Another way the operating parameters can be adjusted is to change when additional product is supplied to the dispersion feeder to compensate for the defective dispersion feeder. Some embodiments comprise supplying additional product based on the measurements by the dispersion feeder falling below a target measurement, and further comprise changing (typically increasing) said target measurement in response to an indication that the dispersion feeder is defective. For example, if the system is configured to supply additional product to the dispersion feeder when the weight of product falls below 50 grams, a build-up of 2 grams of dirt may cause this to happen in practice only once the amount of product falls below 48 grams. Therefore, increasing the target measurement can cause the system to operate more efficiently once again by compensating for this build-up. The amount that the threshold is changed may be predefined, e.g. 2 grams or 5%, or may be changed incrementally based on measurements of the batch measurement units, e.g. until the measurements of the batch measurement units reflect a certain amount of change. For example, the system may increase the target measurement by 1 gram or 2% every 30 seconds until an extra 0.5 grams on average is received in each partial batch.

While the above techniques help compensate for a defective dispersion feeder, it can be difficult to accurately compensate for an unquantified error in the dispersion feeder measurements, particularly as this grows larger. Therefore, in some circumstances, it is preferable to empty the dispersion feeder in order to recalibrate the dispersion feeder measurement unit. Preferably, the method further comprises, in response to an indication that the dispersion feeder is defective, performing a dispersion feeder recalibration process, wherein the dispersion feeder recalibration process comprises ceasing to supply additional product to the dispersion feeder, then continuing to operate the dispersion feeder to distribute the product towards each of the plurality of batch measuring units, and then recalibrating the dispersion feeder measuring unit. Recalibrating the dispersion feeder measuring unit will typically comprise zeroing the measuring unit. The system may, after recalibrating the dispersion feeder measuring unit, resume supply of additional product to the dispersion feeder based on the measurements of the recalibrated dispersion feeder measuring unit. This allows the dispersion feeder to accurately and precisely compensate for any build-up of dirt on the dispersion feeder.

The dispersion feeder should be operated until it is empty of product before recalibrating, in order to be able to accurately recalibrate the dispersion feeder. There are several ways in which the system may do this. The method may require directly observing that the dispersion feeder is empty, e.g. by an operator or by a camera, but preferably the system estimates or infers that the dispersion feeder is empty in order to avoid reliance on additional outside inputs. Preferably, the method further comprises only recalibrating the dispersion feeder measuring unit once one or more recalibration criteria are met, wherein preferably said recalibration criteria comprise: a predefined period of operating the dispersion feeder since the supply of product was ceased; and/or the measurements of the dispersion feeder measuring unit being unchanged within a tolerance for a predefined period. The predefined period of operation may be an operating time or a number of cycles of the system, or both. For example, the system may run for 30 seconds or until 50 dispenses have been performed, which ever happens first. The operating time may be absolute, but preferably the operating time is measured only for time in which the system is working. For example, the system may be intended to run for 30 seconds, but if the system pauses due to a problem downstream of the system or if it pauses between each cycle, then this time in which the system is paused may not contribute to the predefined period of operation. Alternatively, the system may assume that the dispersion feeder is empty once the repeated measurements plateau, i.e. once the measurements are unchanged within a tolerance for a predefined period. For example, the plateau criteria may only be satisfied if there has been no increase and/or decrease in measurements greater than 0.1 grams for 10 seconds or 20 machine cycles. The tolerance may account for noise in the measurement signal, and can be configured as necessary for the particular measurement unit. If the plateau criteria are satisfied, the system may safely assume that the dispersion feeder is empty.

Where the system forms batches of product, the recalibration criteria may comprise a predefined number of batches being formed; each batch measuring unit having contributed to a predefined number of formed batches; and/or each batch measuring unit having measured a predefined total amount of product received from the dispersion feeder. Each of these may be used to infer that the dispersion feeder is empty based on the amount of product that must have passed through the system since the supply was ceased. Requiring each batch measuring unit to have contributed to a predefined number of formed batches is particularly advantageous, as it can be the case that product can back up from one of the measuring units to the dispersion feeder and so a plateau may be seen even though product remains at the dispersion feeder, which could lead to an erroneous zero reading. Requiring each batch measuring unit to have contributed to a predefined number of formed batches ensures that there has been product throughput in each part of the system, and so prevents this type of error from occurring. This may be alternatively achieved where directional feeders are included by requiring a predefined operation, such as a period of operation, of each of the directional feeders.

It will be appreciated that the system may be configured to perform only one of the above techniques to compensate for the defective dispersion feeder. However, preferably, the system is configured to perform more than one of these techniques. For example, the first time the dispersion feeder is indicated to be defective, one technique may be implemented, and then the second time the dispersion feeder is indicated to be defective, a second technique may be implemented. However, in particularly preferred embodiments, performing the dispersion feeder recalibration process is further based on one or more operating parameters of the dispersion feeder. For example, the dispersion feeder may only be recalibrated if the operating parameters are such that the deficiency cannot be compensated for by (further) adjusting the operating parameters. For example, the system may check whether the operating parameters are within predefined acceptable ranges for adjustment, and if they are not, then may perform a recalibration. Performing the dispersion feeder recalibration process may further be based on one or more previous adjustments of the operating parameters, wherein preferably the recalibration process is based on a predefined number of adjustments having been made to one or more operating parameters and/or based on one or more operating parameters having been adjusted by at least a predefined amount. For example, a recalibration may be performed if the target measurement has already been increased twice, and/or by 10 grams or 20% from its starting value.

In order to determine that the dispersion feeder is defective based on the measurements by the batch measuring units, it is important that those measurements are accurate. Whereas it is inconvenient to empty the dispersion feeder to zero, a zero process can be more efficiently incorporated into the normal operation of the batch measuring units. Preferably, the method further comprises periodically recalibrating each of the batch measurement units, wherein recalibrating each batch measurement unit comprises dispensing any product in the batch measuring unit, preventing further product from being received in the batch measuring unit, then recalibrating the batch measuring unit, and then allowing further product to be received in the batch measuring unit. Normally, systems of this type will be operated such that a new partial batch of product is received in the batch measuring unit at the earliest possible moment after it has dispensed the previous partial batch. For example, if the batch measuring unit a swinging door hopper, then the next partial batch of product will be timed to arrive almost concurrent with the swinging doors having reached the closed position.

This does not provide time for the batch measuring unit to stabilise and perform a zero process between each partial batch. Therefore, in the present embodiment, product is temporarily prevented from entering the batch measuring unit. Normally, this will simply involve not dispensing product from a pool hopper above at the usual time, for example, a half second delay may be introduced to allow the batch measuring unit to stabilise and perform a zero process after dispensing product. These recalibration processes may be staggered among the batch measuring units, to minimise the disruption to the efficiency of the system.

As has been mentioned above, the invention is described particularly with respect to supplied product that is food product, preferably food product coated in flavouring, since these are most likely to induce problems with the efficiency of a dispersion feeder, but in principle the method may be applied to any type of product.

The invention is also often described as being applied in the context of operation of a computer combination weigher (CCW), but this method could also be implemented in other systems.

### BRIEF DESCRIPTION OF THE DRAWINGS

The present invention will now be described with reference to the accompanying drawings, of which:
Figure 1 shows a perspective view of a system which may be operated in accordance with methods of the present invention;
Figure 2 shows a schematic view of the system shown in Figure 1;
Figure 3 is a flow diagram illustrating a method of operating a dispersion feeder;
Figure 4 is a flow diagram illustrating a method of identifying a defective dispersion feeder;
Figure 5 is a flow diagram illustrating another method of identifying a defective dispersion feeder;
Figure 6 is a flow diagram illustrating a method of operating a dispersion feeder that has been identified as defective;
Figure 7 is a flow diagram illustrating a method of recalibrating a dispersion feeder that has been identified as defective; and
Figure 8 is a partial flow diagram illustrating a method of recalibrating a weigh hopper.

### DETAILED DESCRIPTION

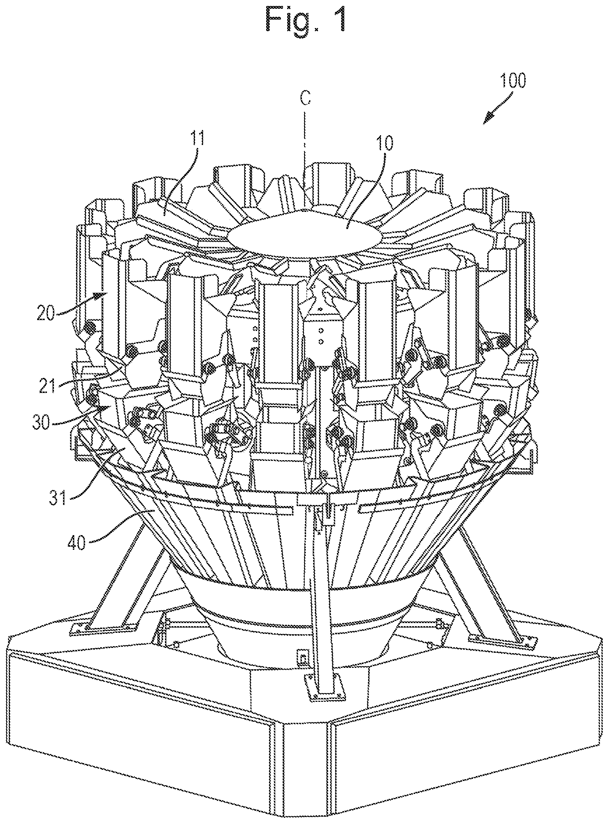

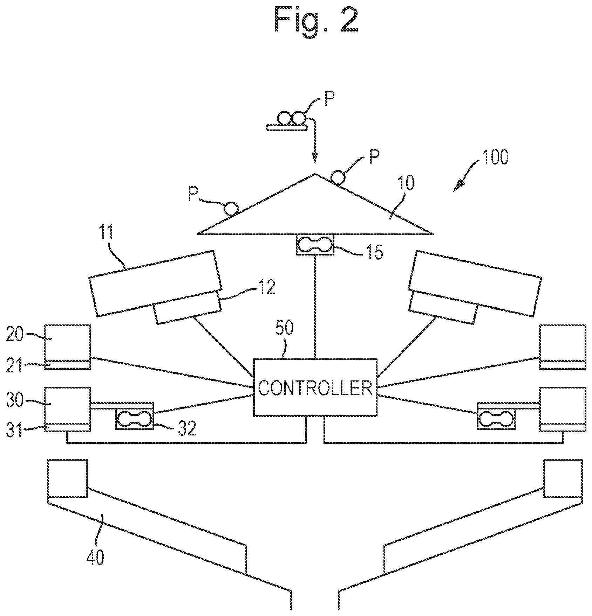

A system which may be operated in accordance with methods of the present invention will first be described with reference to Figures 1 and 2.

Figure 1 shows a computer combination weighing device (CCW) 100. The combination weighing device 100 includes a dispersion table 10, a plurality of feeder troughs 11, a plurality of pool hoppers 20, a plurality of weighing hoppers 30, and a collective discharge chute 40.

As shown in Figure 2, food product P is received onto the dispersion table 10 at a supply position, which is the area in which the product falls from an overhead supply conveyor. The dispersion table 10 is configured to vibrate or rotate about a vertical central axis C to move the food product P to the edge of the dispersion table 10 and to distribute food product to the plurality of feeders 11. The dispersion table 10 is mounted on a weighing unit 15, which weighs the amount of product on the dispersion table. The weighing unit 15 is coupled to a controller 50 and provides the weight measurements to the controller. When the weight on the dispersion table 10 drops below a predetermined amount, the controller causes the overhead supply conveyor to supply more product to the dispersion table.

Each feeder trough 11 comprises a respective vibratory motor 12 coupled to the trough. In use, the vibratory motor is made to vibrate in order to transport product along the feeder trough 11 and into a pool hopper 20. Each vibratory motor of the vibratory feeder is coupled to a controller 50, which is able to control when the feeder transports food product to the pool hopper and how much food product it transports.

Each pool hopper 20 is configured to temporarily hold the food product P supplied by the feeder 11. Each pool hopper has a gate 21 at its lower end and opening said gate allows the product P to be dispensed into the corresponding weighing hopper 30 located therebeneath. Each pool hopper is connected to the controller 50, which controls when the pool hopper dispenses food product P into the weighing hopper 30.

Each weighing hopper is configured to temporarily hold food product P received via the pool hopper from the feeder 11. Each weighing hopper 30 has a gate 31 at its lower end for dispensing product P. Any product dispensed from a weighing hopper 30 is received in a discharge chute, which brings all product to a common discharge point at the centre axis of the system C. Each weighing hopper is coupled to a weighing unit 32, which weighs the hopper and so is able to determine the weight of the contents of the hopper. The weighing unit 32 is coupled to the controller 50 so that the controller can obtain the weight value of the product P in the weighing hopper 30. The gate 31 of each weighing hopper 30 is also connected to the controller so that the opening and closing of the gate can be controlled by the hopper.

In practice, the controller 50 will identify a number of weighing hoppers that contain product whose total weight best corresponds to predetermined criteria for a batch of food product. The controller 50 will then open the gates of the corresponding weighing hoppers to bring the partial batches of food product together. The controller will then cause the pool hoppers 20 corresponding to the weighing hoppers that were just emptied to dispense their product into the corresponding weighing hoppers, which will then weigh the new partial batch of product. The controller will also cause the feeders 11 to feed new product into the pool hoppers 20 that were just emptied. The controller will then repeat the process with the set of partial batches in the weighing hoppers.

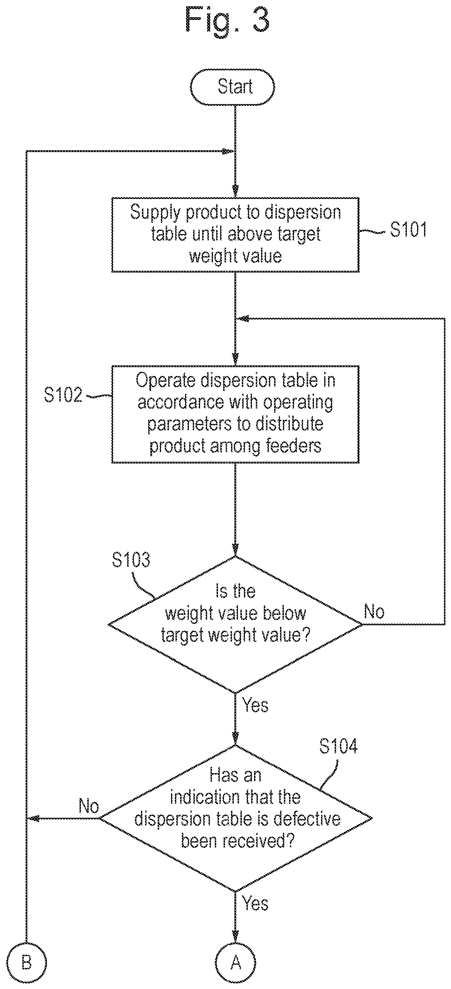

Methods of operating the system shown in Figures 1 and 2 will now be described with reference to Figures 3 to 7.

In the below description, the control steps executed by the control unit on the dispersion table 10 and on the radial feeders 11 and hoppers 20, 30, are described separately and illustrated by separate flow diagrams in the Figures for clarity. However, it will be appreciated that the following process may be integrated into a single combined process performed by the control unit.

Figure 3 shows the steps of a method of operating the dispersion table 10 of the system 100. The process starts and in a first step S101, product is supplied from the supply conveyor so that it falls onto the dispersion table until the weighing unit 15 registers a weight that it is equal to or greater than a target value. This target value may be stored in the controller and will depend on the size of the bathes being formed. The target weight value is typically predefined as the value at which the system runs most optimally for the size of batches being formed. In a process in which the batches being formed are small, e.g. 12 grams, the target weight may be, for example 50 grams.

In this process, this step S101 of supplying product until the weight is equal to or greater than the target weight is shown as occurring only at this step in the process and once the process moves on from step S101, additional product is not supplied again until the process loops back around to step S101 again. In other examples, the controller may continuously monitor the weight on the dispersion table and supply additional product at any point once the weight drops below the target weight.

Once the dispersion table has received product, in step S102 the dispersion table is operated in accordance with its operating parameters to distribute product among the feeders 11. The operation parameters may be the vibration amplitude, vibration frequency, and vibration time of the table 10 in the case that this is a vibratory dispersion table. These parameters will depend on the size of the batches being formed and may be predetermined to achieve a desired throughput of product to each of the feeders 11. For example, the table will typically operate with a larger vibration amplitude, frequency and time when forming larger batches of product, which require an overall larger throughput of product through the system.

The controller 50 may only perform step S102 depending on the operation of the radial feeders 11 and hoppers 20, 30. That is, if no batch of product was formed since the dispersion table was last operated, the dispersion table may not operate so as to avoid oversupplying the radial feeders 11, which would cause them to supply partial batches to the hoppers that are too large.

Operating the dispersion feeder will cause product to leave the table and so reduce the weight of product on the table. In the method illustrated, in step S103, the controller checks whether the weight value is below the target weight value. If it is not, it returns to step S102 and may carry on operating the dispersion table, when required, to supply product to the feeders. If the weight of product on the table is found to have dropped below the target weight in step S103, then the controller moves on to step S104.

In step S104, the controller 50 checks whether it has received an indication that the dispersion table is defective. The process of generating this indication will be described below. It should be noted that the controller itself may generate the indication that the dispersion table is defective as part of its control of the feeders and hoppers, which are described separately in this embodiment. However, in other cases, a separate controller may be provided that controls the parallel operation of the feeders and hoppers.

In the case that there has been no indication that the dispersion table is defective, the process may loop around to step S101 and repeat as described above. In the case that the dispersion table is found to be defective, then the controller may proceed via node A to execute one or more processes for compensating for the defective dispersion table. Examples of such processes will be described further below.

As with step S101, the check for an indication that the dispersion table is defective in step 104 is shown as occurring only at this step in the process. However, in other examples, the controller may continually check for an indication that the dispersion table is defective and immediately proceed via node A to compensatory measures once an indication is received, regardless of the current operating state of the dispersion table.

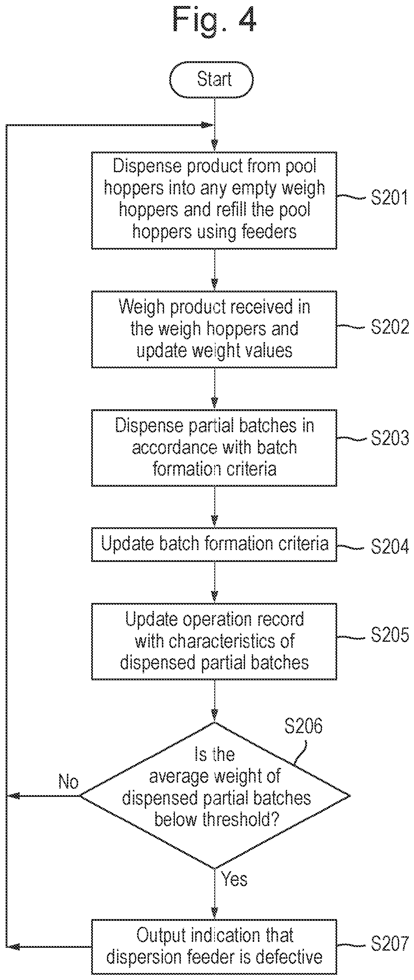

A first process for identifying that the dispersion table is defective will now be described with reference to Figure 4. Again, this process illustrates a batching process already underway, after any initialisation process has been performed. It should also be noted that this process illustrates steps happening in a sequential order, although it should be noted that particularly in fast throughput systems, one step may begin before a preceding step has finished.

After the process starts, in step S201, the controller causes any empty weigh hoppers 30 to be filled with product. This is done by opening the doors 21 of the corresponding pool hopper 20 and dispensing the food into the weigh hopper beneath. The doors 21 are closed and then the corresponding radial feeder 11 causes new product to be introduced into the pool hopper that was just emptied. For example, if the radial feeder 11 is a vibratory radial feeder, then it is made to vibrate with an amplitude, frequency and time in order to transport product into the pool hopper 20. These operating parameters of the radial feeders will depend on the size of the batches being formed and hence the desired size of the partial batches. The operating parameters for the radial feeders can be predetermined, or can be calculated based on a quotient relating the amount of product received in the weigh hoppers to the parameters used when transporting that product to the pool hoppers. The operating parameters will typically differ for each radial feeder, as it is preferable to have deliberately introduced variance in the size of the partial batches received in the weigh hoppers in order to provide more different possible combinations of partial batches.

In step S202, product received in the weigh hoppers 30 is weighed using the weighing unit 32. The controller then updates its weight values for the product in the weigh hoppers. This will also change the possible combinations that can be produced using the product in the weigh hoppers. As noted above, while this is indicated as occurring after the pool hoppers have been refilled, in practice, the weigh hopper will weigh the product as soon as the product has been received and stabilized in the weigh hopper so that an accurate weight reading can be taken, which will likely be during step S201.

In step S203, the system dispenses a set of partial batches in accordance with batch formation criteria. As has been explained above, batch formation criteria will typically include a target minimum weight and a target maximum weight for a "good" batch, such as between 12 grams and 13 grams. In some embodiments, the batch dispensed may simply be the set of partial batches closest to the target minimum weight without being below said weight. In this embodiment, the system may be configured to always dispense a batch of product, and so will allow any weight for an "overweight" batch in excess of 13 grams. An alternative embodiment will be described below, which may selectively skip a batch of product in order to avoid too much giveaway through overweigh batches. The batch formation criteria can also include various other requirements, as necessary. For example, it is typically preferred that each weigh hopper dispense product at roughly the same frequency. Otherwise, if one hopper does not dispense for a long time, the associated vibratory feeder 11 may become backed up with product from the dispersion table 10, which would lead to significantly overweight partial batches that are difficult to accommodate in the normal batch formation process. Therefore, the batch formation criteria can also include a biasing towards weigh hoppers that have not dispensed in a certain number of previous dispense cycles, or a biasing away from weigh hoppers that have recently dispensed product. Such batch formation criteria will depend highly on the nature of the batches being formed, and the wider operating parameters of the system and the skilled person will be familiar with the options for configuring such requirements.

After a batch of product has been dispensed, the batch formation criteria are updated in step S204. As noted above, this provides the system with an opportunity to include biasing away from the weigh hoppers that just dispensed product, in order to smooth throughput across all hoppers of the system.

In this embodiment, having dispensed a batch of product, in step S205, the controller updates an operation record with the characteristics of the dispensed partial batches. For example, the controller may keep a rolling average weight of a dispensed partial batch over the last 100 formed batches. Alternatively, the controller may keep a rolling average of the number of partial batches included in each batch over the last 100 formed batches. As noted above, the number of partial batches dispensed in any dispense cycle is determined based on the weight of those partial batches. For example, if the system is set up to form batches of 12 grams by dispensing three partial batches of approximately 4 grams each, then an average partial batch weight of 4 grams will be expected. As the weigh hoppers are undersupplied by a defective dispersion table, they may tend towards weighing smaller partial batches, and the average may drop, for example, as more batches are formed with four partial batches weighing roughly 3 grams each. While the above uses the example of an average partial batch of 4 grams swinging to an average of 3 grams when undersupplied, in practice, systems may be configured to operate with, on average, a non-integer number of partial batches being dispensed, e.g. 3.8 partial batches being dispensed on average per batch. That is, on average, the system would form a batch with four partial batches four times for every one time that it forms a batch with three partial batches.

In step S206, the controller compares values from the operation record with one or more reference values. In this embodiment, the controller compares the rolling average of the weight of each dispensed partial batch with a threshold value. In the simplified example in which the system is configured to dispense partial batches of roughly 4 grams, the controller may compare this average with a reference value of, for example, 3.8 grams. If the average is equal to or above this value, the system may loop back around to step S201 and continue operation. On the other hand, if the average over the last 100 dispenses has fallen below 3.8 grams, the controller may therefore infer that the weigh hoppers are undersupplied and that the dispersion table is defective. The system then proceeds to step S207, in which it outputs an indication that the dispersion feeder is defective. In the presently illustrated processes, this indication that the dispersion table is defective is acted upon by the process controlling the dispersion table. Hence, the process illustrated in Figure 4 loops around to step S201 ready to continue dispensing further batches of product, subject to any compensatory processes enacted by the controller, which will be discussed below.

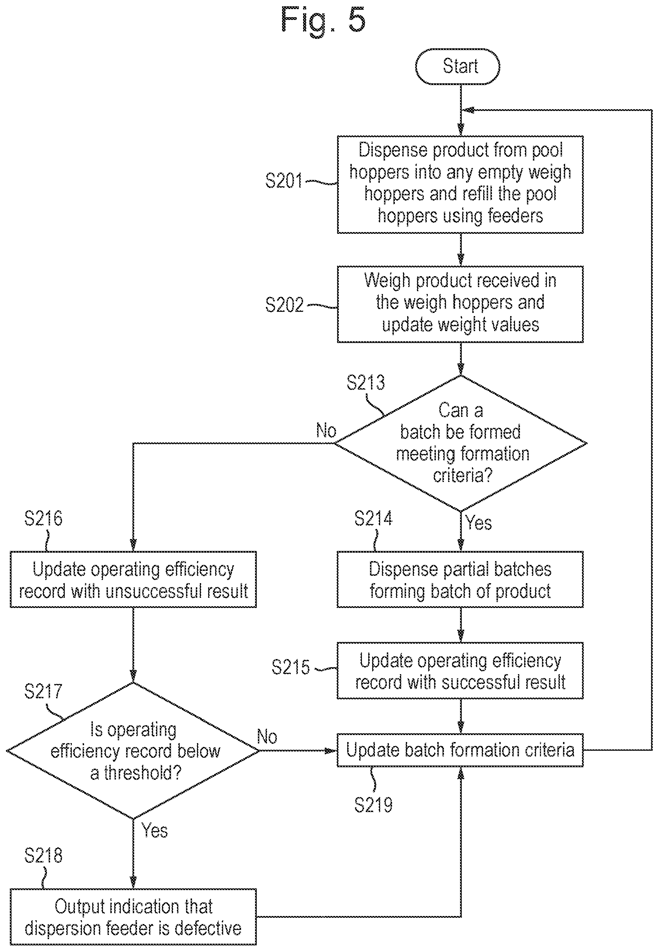

Before discussing processes responsive to the indication that the dispersion feeder is defective, another process for identifying a defective dispersion feeder will be described with reference to Figure 5.

Again, this process illustrates a batching process already underway, after any initialisation process has been performed, and starts with step S201, in which the controller causes any empty weigh hoppers 30 to be filled with product and for the corresponding pool hoppers to then be filled by the radial feeders in the manner described above. Then, in step S202, the product received in the weigh hoppers 30 is weighed using the weighing unit 32 and the weight values and possible combinations updated, again as described above.

In step S213, the controller 50 determines whether a batch of product can be formed meeting the batch formation criteria. As with the description of the previous process, batch formation criteria will typically include a target minimum weight and a target maximum weight for a "good" batch, such as between 12 grams and 13 grams. In this case, the batch formation criteria may also include a maximum weight for an "overweight" batch, such as 15 grams, which will normally not be allowed unless the system has no other option for dispensing a "good" batch and has to dispense a batch with giveaway in order to continue operating. As noted above, the batch formation criteria can also include a biasing away from recently dispensed weigh hoppers in order to smooth overall throughput. Assuming that the controller finds an acceptable combination meeting the batch formation criteria, a successful determination is made and the process proceeds to step S214, in which the controller dispenses those partial batches in order to form a batch of product. Then, in step S215, the controller updates an operating efficiency record with the successful determination.

While step S213 is illustrated as occurring after all weights are updated in step S202, in systems with particularly high rates of batch formation, weight values may not be available for the weigh hoppers that were just filled in step S201 before the system is required to dispense the next batch of product. This is because an accurate weight value can only be measured once the product is settled in the weigh hopper and the weigh hopper has ceased any significant vibrating as a result of the product hitting the hopper. Therefore, in this embodiment, in step S213, the controller can make a negative determination and decide that it cannot form an acceptable batch with the partial batches available, and instead choose to wait for more partial batches to be available. In this case, the process proceeds to step S216, in which the controller updates the operating efficiency record with the unsuccessful determination. In this embodiment, the operating efficiency record is a log of the proportion of successful to unsuccessful determinations over the last 100 determinations. That is, it is a log of the number of times that in step S213 the system decided it could form an acceptable batch against the number of times it decided that it could not form an acceptable batch. It will be noted that these determinations are based on the weight of the product in the weigh hoppers, and so are indicative of an undersupply of product, and hence a defective dispersion table.

After an unsuccessful determination, and once the operation efficiency record is updated in step S216, the controller checks in step S217, whether the operating efficiency record is below a threshold value. For example, the threshold may be at least 80 of the last 100 determinations being successful. If the last determination was a negative determination and took the operating efficiency below the threshold, then the process proceeds to step S218, in which the system outputs an indication that the dispersion table is defective. For example, if the last determination took the split for the last 100 determinations to 79 successful determinations and 21 unsuccessful, then this has fallen below the exemplary threshold and is indicative of a defective dispersion feeder.

After any of step S215, S218, or a finding in step S217 that the operating efficiency is not below the threshold, the process proceeds to step S219. In this step, the batch formation criteria are updated. If this follows a successful batch formation, then this may involve a biasing away from the dispensed weigh hoppers. If this follows an unsuccessful batch, then this may adjust or remove the upper limit for an overweight batch in order to guarantee that a batch is dispensed on the next pass. The process then loops back around to step S201 for the next batch formation cycle.

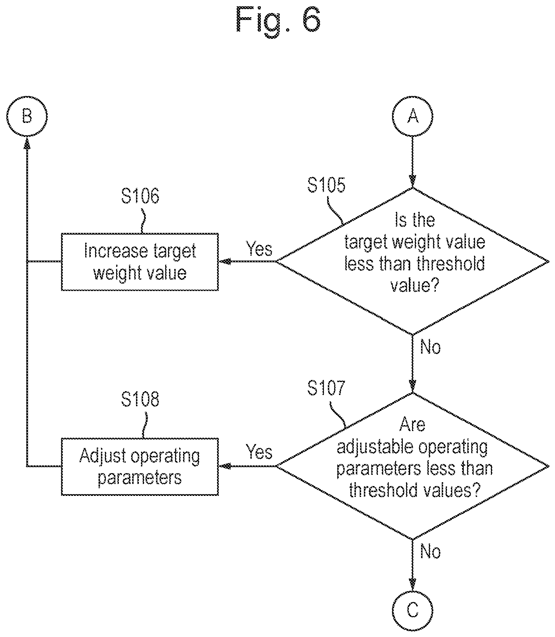

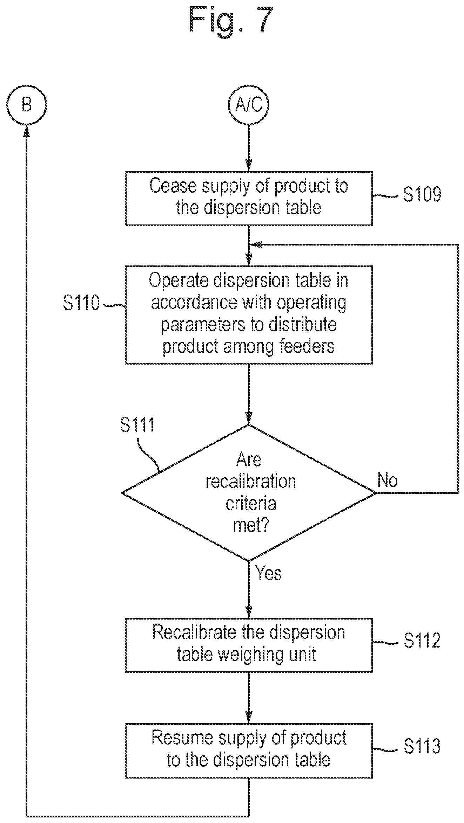

Two processes for outputting an indication that the dispersion feeder is defective have now been described with reference to Figures 4 and 5. As mentioned above, the operation of the dispersion table may make use of this indication and act to compensate for the defective dispersion table and such techniques will now be described with reference to Figures 6 and 7.

Figure 6 shows a first process for compensating for the defective dispersion table. After step S104 recognises an indication has been output that the dispersion feeder is defective, that process proceeds via node A in Figure 3 to step S105 in Figure 6.

In step S105, the controller checks whether the target weight for the dispersion table is less than a threshold value. The target weight will initially be set depending on the weight of batches being formed. For example, in the case of batches weighing 12 grams, the target weight for the dispersion table may be set at 50 grams. As a result, in step S101, already described, product will be supplied until the dispersion table exceeds this value. The step, S105, the threshold value is a maximum allowed target weight value. For example, the system may be programmed to allow the target weight to be adjusted up to 60 grams when the dispersion feeder is defective. If the target weight value is less than this threshold value, e.g. if the target weight is still at its starting value of 50 grams, which is less than the programmed maximum of 60 grams, then the process moves to step S106.

The controller increases the target weight value in step S106. For example, the target weight may be adjusted from 50 grams to 55 grams. This increase may be implemented in any way desired, such as predetermined steps (e.g. 5 grams) or as a percentage (e.g. an increase of 10%) or may scale based on the weight values of the partial batches in the weigh hoppers, with a larger difference from the desired partial batch weights corresponding to a larger increase in the target weight value for the dispersion table. Figure 6 illustrates the process then returning via node B to step S101 in Figure 3, whereupon the dispersion table is supplied with product up to the new target weight value.

If, in step S105, the target weight is found to be equal to (or greater than) the threshold, e.g. if the target weight has already been adjusted up to the threshold previously in the process, then the process proceeds to S107.

In step S107, the controller checks whether the adjustable operating parameters of the dispersion table are less than threshold values. For example, in the case of a vibratory dispersion table, this may be programmed to operate with certain vibration amplitude, frequency and time. These values may be adjustable up to certain threshold values in order to increase throughput of product. If step S107 determines that these operating parameters are within these threshold values, then the process proceeds to step S108, whereupon these operating parameters are adjusted. This may involve one or more of the operating parameters, e.g. the vibration amplitude, frequency and time, being adjusted. Again, these adjustments may be implemented in any desired manner, including predefined absolute or percentage increments, or based on the weights measured by the weigh hoppers. The adjustments may be made to only one of the adjustable parameters, to a set, or to all of them. Figure 6 illustrates the process then returning via node B to step S101 in Figure 3, and then to step S102, whereupon the dispersion table is operated in accordance with the adjusted parameters.

While the present process illustrates step S107 only occurring once the target weight of the dispersion table can no longer be adjusted, in alternative embodiments, the system may alternate between increasing the target weight and adjusting the operating parameters, or may implement both at once, or decide which to implement based on other factors.

If it is determined in step S107 that all of the operating parameters are at or above the threshold values, then the process proceeds to node C of Figure 6, which in this embodiment leads to the process illustrated in Figure 7. However, alternatively node C could correspond to an indication that the dispersion table needs cleaning or an automated stop process, which empties and stops the system for cleaning.

Figure 7 illustrates a recalibration process, which may be implemented to compensate for a defective dispersion table. As noted above, this may start following step S107, if no further operation parameters can be adjusted. However, alternatively this process could be implemented directly after an indication that the dispersion table is defective is received, i.e. following directly from node A shown in Figure 3. This may be the case if the system is not configured to adjust the target weight for the dispersion table, or to adjust the operating parameters.

In the process illustrated in Figure 7, firstly supply of product to the dispersion table is ceased in step S109. In the process of Figure 3, product is only supplied in response to step S101, however, in some processes, the supply of product may be continuous, and the speed of the supply adjusted based on the weight measured at the dispersion table, in which case step S109 will involve stopping the supply altogether.

Then, in step S110, the dispersion table continues to operate in accordance with its operating parameters to distribute product among the radial feeders. In parallel with this, either of the processes illustrated in Figures 4 and 5 may still take place, i.e. so that batches are still formed, new product supplied into empty weigh hoppers and pool hoppers refilled by the radial feeders. This continued operation of the CCW without the supply of new product will cause the dispersion table to empty as all of its product is distributed among the active radial feeders.

In step S111, the process checks whether predefined recalibration criteria are met. For example, these recalibration criteria may be that 30 seconds has passed since the supply was ceased, or that there has been 50 attempts at forming batches. Alternatively, the controller may check that the measurements made by the dispersion table have plateaued. For example, the plateau criteria may only be satisfied if there has been no increase or decrease in the apparent weight on the dispersion table greater than 0.1 grams for 10 seconds or 20 machine cycles. The recalibration criteria may also involve both a predefined time and a plateau, and may be satisfied once one of the two is met, or only once both are met.

If the recalibration criteria are not met, then the process loops back to S110, and the dispersion table continues to operate to attempt to distribute product among the radial feeders. However, if the recalibration criteria are met, then the dispersion table is assumed to be empty and the process proceeds to step S112. In this step, the dispersion table weighing unit is recalibrated. For example, the weighing unit is tared, to set a new zero value. Then supply of product to the dispersion table is resumed in step S113 and the process then returns via node B to the normal operation of the dispersion table, such as illustrated in Figure 3. If the process of Figure 7 is used in combination with that shown in Figure 6, an additional step may be included of resetting the target weight and operating parameters to their default starting values, in view of the recalibration of the dispersion table weighing unit.

In the combined process of Figures 3, 6 and 7, the system will continue to employ compensatory measures endlessly, increasing the target weight and operating parameters and then recalibrating the weighing unit. However, it may be preferred to include a step that checks for the number of times that the weighing unit has been recalibrated and once this reaches a threshold value, such as four recalibrations, stops the operating of the system and issues a clean command, prompting an operator to clean the system. This may be implemented between steps S104 and S105, for example.

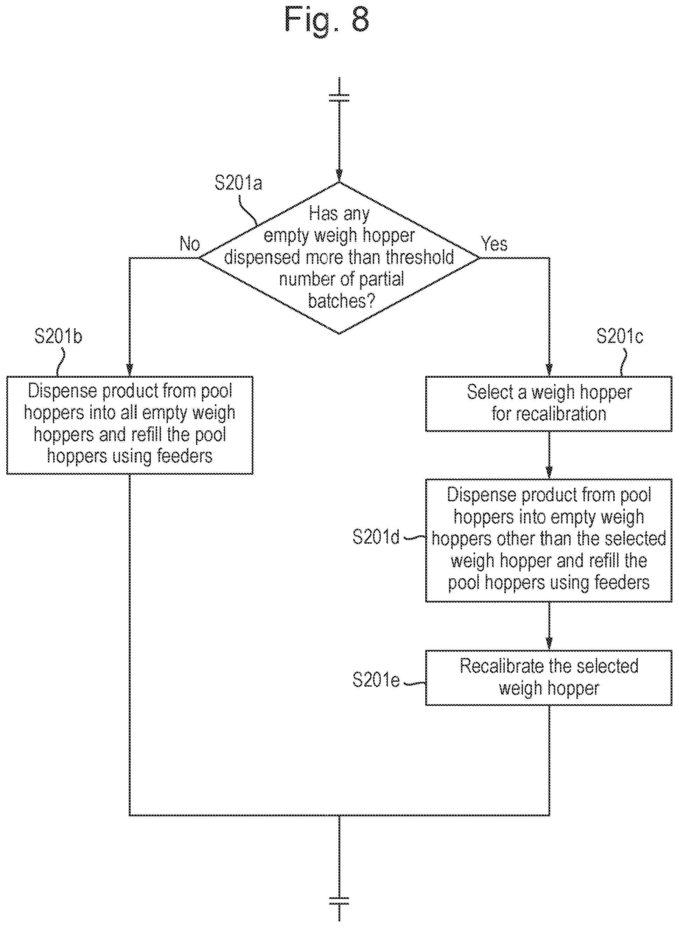

As noted above, it may also be preferred to periodically recalibrate each of the weigh hoppers, to compensate for build-up of flavouring which may impact the accuracy of the partial batch weights. To do this, step S201 from Figures 4 and 5 may be replaced with the steps shown in Figure 8 and describe below.

In the process of Figure 8, instead of refilling all empty weigh hoppers, the controller first checks whether any weigh hopper that is now empty, i.e. having just dispensed a partial batch in order to form a batch of product, has dispensed more than a threshold number of partial batches since the process started or the weigh hopper was last recalibrated. This threshold number may be predetermined based on type of product being batched. Products with lots of flavouring coating may require recalibration of the weigh hoppers more often than products with sparser coatings. The threshold value may be, for example, 100 partial batches.

If no weigh hopper that is currently empty has dispensed more than this number of partial batches, then the process proceeds to step S201b, in which all empty weigh hoppers are filled with product from the corresponding pool hopper and, the pool hoppers then refilled using the radial feeders. Then the process returns to the standard step S202 shown in Figures 4 or 5.

However, if one or more of the empty weigh hoppers has dispensed more than the threshold number of partial batches, then the process proceeds to step S201c. In this step, the controller selects a weigh hopper for recalibration. Typically this will involve selecting the weigh hopper that has dispensed the most partial batches since the system started or the last recalibration of that weigh hopper. If more than one weigh hopper is equal in this regard, then only one will be selected in order to minimise the disruption to the batch forming process as a result of empty and unavailable weigh hoppers.

Once the weigh hopper for recalibration is selected, the process proceeds to step S201d, in which all empty weigh hoppers, except for the selected weigh hopper, are filled with product from the corresponding pool hopper and, the pool hoppers then refilled using the radial feeders.

Then, in step S201e, the weigh hopper that has been left empty is recalibrated. For example, the weigh hopper weighing unit is tared, to set a new zero value. In practice, this recalibration delayed until later in the process to ensure that the weigh hopper has ceased any vibrating from opening and closing the hopper doors, and so that the recalibration is accurate. For example, the recalibration may be delayed until immediately before step S201a is performed on the next machine cycle.

## Claims

1. A method of identifying a defective dispersion feeder (10, 15) in a system suitable for supplying food product from a supply position to a plurality of batch measuring units (30, 31, 32), the method comprising:
supplying product to a dispersion feeder (10, 15) configured to receive product at the supply position and distribute the product towards each of the plurality of batch measuring units (30, 31, 32);
operating the dispersion feeder (10, 15) to distribute the product towards each of the plurality of batch measuring units (30, 31, 32);
repeatedly measuring the amount of product at the dispersion feeder (10, 15) using a dispersion feeder measuring unit (15) and supplying additional product to the dispersion feeder (10, 15) based on said measurements:
receiving product in at least some of the plurality of batch measuring units (30, 31, 32);
measuring the product received in the plurality of batch measuring units (30, 31, 32);
**characterized in that** the method is further comprising:
outputting an indication that the dispersion feeder (10, 15) is defective based on the measurements of the product received in the plurality of batch measuring units (30, 31, 32).

2. A method according to claim 1, wherein each batch measuring unit (30, 31, 32) receives a partial batch of product, and further comprising forming one or more batches of product according to predefined criteria, preferably according to predefined weight criteria, wherein each batch of product is formed by dispensing a plurality of partial batches of product based on the measurements of the product made by the batch measuring units (30, 31, 32) and said predefined criteria, and preferably comprising forming a plurality of batches of product according to the predefined criteria, wherein outputting an indication that the dispersion feeder (10, 15) is defective is based on the rate at which batches are formed meeting the predefined criteria, and further preferably wherein each batch is formed according to predefined weight criteria, and wherein outputting an indication that the dispersion feeder (10, 15) is defective is based on the rate at which batches are formed that either fall within or exceed a target weight range.

3. A method according to claim 2, wherein forming each batch comprises identifying a selection of partial batches of product to dispense based on the measurements of the product made by the batch measuring units (30, 31, 32) and said predefined criteria, and preferably wherein outputting an indication that the dispersion feeder (10, 15) is defective is based on the characteristics of the identified selection of partial batches, such as the number of partial batches forming the batch of product, for one or more batches of product.

4. A method according to any of claims 2 to 3, further comprising, before forming each batch, determining whether to form a batch of product based on the measurements of the product received in the plurality of batch measuring units (30, 31, 32) and the predefined criteria, and only forming a batch upon a positive determination, and wherein outputting an indication that the dispersion feeder (10, 15) is defective is based on the results of a plurality of determinations, wherein preferably outputting an indication that the dispersion feeder (10, 15) is defective is based on the rate of positive determinations falling below a threshold.

5. A method according to any of claims 2 to 4, comprising forming one or more batches of product according to predefined weight criteria, wherein said predefined weight criteria include a minimum and/or maximum target batch weight of 100 grams or less, preferably 50 grams or less, more preferably 30 grams or less, most preferably 20 grams or less.

6. A method according to any of the preceding claims, wherein the dispersion feeder measuring unit (15) is a weighing unit coupled to the dispersion feeder (10, 15) and configured to measure the weight of the product at the dispersion feeder (10, 15), wherein preferably supplying additional product to the dispersion feeder (10, 15) is based on the measured weight of the product at the dispersion feeder falling below a target weight, wherein preferably said target weight is 500 grams or less, preferably 200 grams or less, more preferably 100 grams or less, most preferably 50 grams or less.

7. A method according to any of the preceding claims, wherein the dispersion feeder (10, 15) is a dispersion table (10) configured to vibrate and/or rotate to distribute the product towards each of the plurality of batch measuring units (30, 31, 32); and/or wherein the system further comprises a plurality of directional feeders (11), each configured to receive product from the dispersion feeder (10, 15) and transport the product towards at least one of the batch measuring units (30, 31, 32), wherein preferably said plurality of directional feeders (11) are radial feeders, preferably vibratory radial feeders.

8. A method according to any of the preceding claims, further comprising a respective pool hopper located between the dispersion feeder (10, 15) and each batch measuring unit (30, 31, 32), said pool hopper (20, 21) arranged to receive product from the dispersion feeder (10, 15) and dispense the received product into the respective batch measuring unit (30, 31, 32); and/or wherein each batch measuring unit (30, 31, 32) comprises a hopper (30), preferably a weighing hopper, configured to receive and hold product for measuring and further configured to dispense the received product.

9. A method according to any of the preceding claims, further comprising adjusting one or more operating parameters of the dispersion feeder (10, 15) in response to an indication that the dispersion feeder (10, 15) is defective, wherein preferably said operating parameters include one or more of: a vibration amplitude, a vibration frequency, a vibration time, a rotation speed, a rotation time, and/or a rate of change of direction of rotation; and/or preferably said operating parameters include a target measurement, wherein supplying additional product to the dispersion feeder (10, 15) is based on said measurements by the dispersion feeder measuring unit (15) falling below the target measurement, and further comprising changing said target measurement in response to an indication that the dispersion feeder (10, 15) is defective.

10. A method according to any of the preceding claims, further comprising, in response to an indication that the dispersion feeder (10, 15) is defective, performing a dispersion feeder recalibration process, wherein the dispersion feeder recalibration process comprises ceasing to supply additional product to the dispersion feeder (10, 15), then continuing to operate the dispersion feeder (10, 15) to distribute the product towards each of the plurality of batch measuring units (30, 31, 32), and then recalibrating the dispersion feeder measuring unit (15), and preferably further comprising, after recalibrating the dispersion feeder measuring unit (15), resuming supply of additional product to the dispersion feeder (10, 15) based on the measurements of the recalibrated dispersion feeder measuring unit (15).

11. A method according to claim 10, further comprising only recalibrating the dispersion feeder measuring unit (15) once one or more recalibration criteria are met, wherein preferably said recalibration criteria comprise: a predefined period of operating the dispersion feeder (10, 15) since the supply of product was ceased; and/or the measurements of the dispersion feeder measuring unit (15) being unchanged within a tolerance for a predefined period.

12. A method according to claim 11 when dependent on at least claim 2, wherein the recalibration criteria comprise: a predefined number of batches being formed; each batch measuring unit (30, 31, 32) having contributed to a predefined number of formed batches; and/or each batch measuring unit (30, 31, 32) having measured a predefined total amount of product received from the dispersion feeder (10, 15).

13. A method according to any of claims 10 to 12, wherein performing the dispersion feeder recalibration process is further based on one or more operating parameters of the dispersion feeder (10, 15), and preferably further comprising adjusting one or more operating parameters of the dispersion feeder (10, 15) in response to an indication that the dispersion feeder (10, 15) is defective, wherein performing the dispersion feeder recalibration process is further based on one or more previous adjustments of the operating parameters, wherein further preferably the recalibration process is based on a predefined number of adjustments having been made to one or more operating parameters and/or based on one or more operating parameters having been adjusted by at least a predefined amount.

14. A method according to any preceding claim, further comprising periodically recalibrating each of the batch measurement units (30, 31, 32), wherein recalibrating each batch measurement unit (30, 31, 32) comprises dispensing any product in the batch measuring unit (30, 31, 32), preventing further product from being received in the batch measuring unit (30, 31, 32), then recalibrating the batch measuring unit (30, 31, 32), and then allowing further product to be received in the batch measuring unit (30, 31, 32).

15. A method according to any preceding claim, wherein the system is a computer combination weigher (CCW), and/or wherein the supplied product is food product, preferably food product coated in flavouring.

## Patentansprüche

1. Verfahren zum Identifizieren eines defekten Dispersionszuführers (10, 15) in einem System, das zum Zuführen von Lebensmitteln von einer Zuführposition zu einer Vielzahl von Chargen-Messeinheiten (30, 31, 32) eingerichtet ist, wobei das Verfahren Folgendes umfasst:
Zuführen des Produkts zu einem Dispersionszuführer (10, 15), der so konfiguriert ist, dass er das Produkt an der Zuführposition aufnimmt und das Produkt an jede der Vielzahl von Chargen-Messeinheiten (30, 31, 32) verteilt;
Betreiben des Dispersionszuführers (10, 15), um das Produkt an jede der Vielzahl von Chargen-Messeinheiten (30, 31, 32) zu verteilen;
wiederholtes Messen der Menge des Produkts am Dispersionszuführer (10, 15) unter Verwendung einer Dispersionszuführer-Messeinheit (15) und Zuführen von zusätzlichem Produkt zum Dispersionszuführer (10, 15) auf der Grundlage der Messungen;
Empfangen des Produkts in zumindest einigen der Vielzahl von Chargen-Messeinheiten (30, 31, 32);
Messen des empfangenen Produkts in der Vielzahl von Chargen-Messeinheiten (30, 31, 32);
**dadurch gekennzeichnet, dass** das Verfahren weiter Folgendes umfasst:
Ausgeben einer Anzeige, dass der Dispersionszuführer (10, 15) defekt ist, auf der Grundlage der Messungen des Produkts, das in der Vielzahl von Chargen-Messeinheiten (30, 31, 32) empfangen wurde.

2. Verfahren nach Anspruch 1, wobei jede Chargen-Messeinheit (30, 31, 32) eine Teilcharge des Produkts empfängt, und weiter umfassend das Bilden einer oder mehrerer Chargen des Produkts gemäß vordefinierten Kriterien, vorzugsweise gemäß vordefinierten Gewichtskriterien, wobei jede Charge des Produkts gebildet wird, indem eine Vielzahl von Teilchargen des Produkts auf der Grundlage der von den Chargen-Messeinheiten (30, 31, 32) vorgenommenen Messungen des Produkts und der vordefinierten Kriterien abgegeben wird, und vorzugsweise umfassend das Bilden einer Vielzahl von Chargen des Produkts gemäß den vordefinierten Kriterien, wobei das Ausgeben einer Anzeige, dass der Dispersionszuführer (10, 15) defekt ist, auf der Grundlage der Rate erfolgt, mit der Chargen gebildet werden, die die vordefinierten Kriterien erfüllen, und weiter vorzugsweise, wobei jede Charge gemäß vordefinierten Gewichtskriterien gebildet wird, und wobei das Ausgeben einer Anzeige, dass der Dispersionszuführer (10, 15) defekt ist, auf der Grundlage der Rate erfolgt, mit der Chargen gebildet werden, die entweder innerhalb eines Zielgewichtsbereichs liegen oder diesen überschreiten.

3. Verfahren nach Anspruch 2, wobei das Bilden jeder Charge das Identifizieren einer Auswahl von Teilchargen des auszugebenden Produkts auf der Grundlage der von den Chargen-Messeinheiten (30, 31, 32) vorgenommenen Messungen des Produkts und der vordefinierten Kriterien umfasst, und vorzugsweise wobei das Ausgeben einer Anzeige, dass der Dispersionszuführer (10, 15) defekt ist, auf der Grundlage der Eigenschaften der identifizierten Auswahl von Teilchargen erfolgt, wie beispielsweise der Anzahl von Teilchargen, die die Charge des Produkts bilden, für eine oder mehrere Chargen des Produkts.

4. Verfahren nach einem der Ansprüche 2 bis 3, weiter umfassend, vor dem Bilden jeder Charge, das Bestimmen, ob eine Charge des Produkts auf der Grundlage der Messungen des Produkts, die in der Vielzahl von Chargen-Messeinheiten (30, 31, 32) empfangen wurden, und der vordefinierten Kriterien gebildet werden soll, und das Bilden einer Charge nur bei einer positiven Bestimmung, und wobei das Ausgeben einer Anzeige, dass der Dispersionszuführer (10, 15) defekt ist, auf der Grundlage der Ergebnisse einer Vielzahl von Bestimmungen erfolgt, wobei das Ausgeben einer Anzeige, dass der Dispersionszuführer (10, 15) defekt ist, vorzugsweise auf der Grundlage der Rate der positiven Bestimmungen erfolgt, die unter einen Schwellenwert fallen.

5. Verfahren nach einem der Ansprüche 2 bis 4, umfassend das Bilden einer oder mehrerer Chargen des Produkts gemäß vordefinierten Gewichtskriterien, wobei die vordefinierten Gewichtskriterien ein Mindest- und/oder Höchstzielchargengewicht von 100 Gramm oder weniger, vorzugsweise 50 Gramm oder weniger, noch bevorzugter 30 Gramm oder weniger, am meisten bevorzugt 20 Gramm oder weniger einschließen.

6. Verfahren nach einem der vorstehenden Ansprüche, wobei die Messeinheit (15) des Dispersionszuführers eine Wiegeeinheit ist, die mit dem Dispersionszuführer (10, 15) verbunden und so konfiguriert ist, dass sie das Gewicht des Produkts am Dispersionszuführer (10, 15) misst, wobei vorzugsweise das Zuführen von zusätzlichem Produkt zum Dispersionszuführer (10, 15) auf der Grundlage des gemessenen Gewichts des Produkts am Dispersionszuführer erfolgt, das unter ein Sollgewicht fällt, wobei vorzugsweise das Zielgewicht 500 Gramm oder weniger, vorzugsweise 200 Gramm oder weniger, noch bevorzugter 100 Gramm oder weniger, am meisten bevorzugt 50 Gramm oder weniger beträgt.

7. Verfahren nach einem der vorstehenden Ansprüche, wobei der Dispersionszuführer (10, 15) ein Dispersionsband (10) ist, das so konfiguriert ist, dass es vibriert und/oder rotiert, um das Produkt an jede der Vielzahl von Chargen-Messeinheiten (30, 31, 32) zu verteilen;
und/oder wobei das System weiter eine Vielzahl von Richtungsförderern (11) umfasst,
die jeweils so konfiguriert sind, dass sie Produkt vom Dispersionszuführer (10, 15) aufnehmen und das Produkt zu mindestens einer der Chargen-Messeinheiten (30, 31, 32) transportieren,
wobei vorzugsweise die Vielzahl von Richtungsförderern (11) radiale Förderer, vorzugsweise vibrierende radiale Förderer sind.

8. Verfahren nach einem der vorstehenden Ansprüche, weiter umfassend einen jeweiligen Sammeltrichter, der zwischen dem Dispersionszuführer (10, 15) und der jeweiligen Chargen-Messeinheit (30, 31, 32) angeordnet ist, wobei der Sammeltrichter (20, 21) so angeordnet ist, dass er Produkt aus dem Dispersionszuführer (10, 15) aufnimmt und das aufgenommene Produkt in die jeweilige Chargen-Messeinheit (30, 31, 32) abgibt; und/oder wobei jede Chargen-Messeinheit (30, 31, 32) einen Trichter (30), vorzugsweise einen Wägetrichter, umfasst, der so konfiguriert ist, dass er das Produkt zum Messen aufnimmt und hält, und weiter so konfiguriert ist, dass er das aufgenommene Produkt abgibt.

9. Verfahren nach einem der vorstehenden Ansprüche, weiter umfassend das Einstellen eines oder mehrerer Betriebsparameter des Dispersionszuführers (10, 15) als Reaktion auf eine Anzeige, dass der Dispersionszuführer (10, 15) defekt ist, wobei vorzugsweise die Betriebsparameter einen oder mehrere der folgenden Parameter einschließen: eine Schwingungsamplitude, eine Schwingungsfrequenz, eine Schwingungszeit, eine Drehgeschwindigkeit, eine Drehzeit und/oder eine Änderungsrate der Drehrichtung; und/oder vorzugsweise die Betriebsparameter eine Zielmessung einschließen, wobei das Zuführen von zusätzlichem Produkt zum Dispersionszuführer (10, 15) auf der Grundlage der Messungen durch die Messeinheit (15) des Dispersionszuführers erfolgt, die unter die Sollmessung fallen, und weiter umfassend das Ändern der Sollmessung als Reaktion auf eine Anzeige, dass der Dispersionszuführer (10, 15) defekt ist.

10. Verfahren nach einem der vorstehenden Ansprüche, weiter umfassend, als Reaktion auf eine Anzeige, dass der Dispersionszuführer (10, 15) defekt ist, das Durchführen eines Neukalibrierungsprozesses des Dispersionszuführers, wobei der Neukalibrierungsprozess des Dispersionszuführers das Beenden des Zuführens von zusätzlichem Produkt zum Dispersionszuführer (10, 15), dann das Fortsetzen des Betriebs des Dispersionszuführers (10, 15), um das Produkt an jede der Vielzahl von Chargen-Messeinheiten (30, 31, 32) zu verteilen, und dann das Neukalibrieren der Messeinheit (15) des Dispersionszuführers umfasst, und vorzugsweise weiter umfassend, nach dem Neukalibrieren der Messeinheit (15) des Dispersionszuführers, das Wiederaufnehmen des Zuführens von zusätzlichem Produkt zu dem Dispersionszuführer (10, 15) auf der Grundlage der Messungen der neu kalibrierten Messeinheit (15) des Dispersionszuführers.

11. Verfahren nach Anspruch 10, weiter umfassend das Neukalibrieren der Messeinheit (15) des Dispersionszuführers nur dann, wenn einmal ein oder mehrere Neukalibrierungskriterien erfüllt sind, wobei die Neukalibrierungskriterien vorzugsweise Folgendes umfassen: eine vordefinierte Zeitspanne des Betriebs des Dispersionszuführers (10, 15) seit Beendigung der Produktzuführung; und/oder die Messungen der Messeinheit (15) des Dispersionszuführers bleiben innerhalb einer Toleranz für eine vordefinierte Zeitspanne unverändert.

12. Verfahren nach Anspruch 11, wenn es von mindestens Anspruch 2 abhängt, wobei die Neukalibrierungskriterien Folgendes umfassen: eine vordefinierte Anzahl von Chargen wird gebildet; jede Chargen-Messeinheit (30, 31, 32) hat zu einer vordefinierten Anzahl von gebildeten Chargen beigetragen; und/oder jede Chargen-Messeinheit (30, 31, 32) hat eine vordefinierte Gesamtmenge des vom Dispersionszuführer (10, 15) empfangenen Produkts gemessen.

13. Verfahren nach einem der Ansprüche 10 bis 12, wobei das Durchführen des Neukalibrierungsprozesses für den Dispersionszuführer weiter auf einem oder mehreren Betriebsparametern des Dispersionszuführers (10, 15) basiert und vorzugsweise weiter das Einstellen eines oder mehrerer Betriebsparameter des Dispersionszuführers (10, 15) als Reaktion auf eine Anzeige, dass der Dispersionszuführer (10, 15) defekt ist, umfasst, wobei das Durchführen des Neukalibrierungsprozesses für den Dispersionszuführer weiter auf der Grundlage einer oder mehrerer vorheriger Einstellungen der Betriebsparameter erfolgt, wobei weiter vorzugsweise der Neukalibrierungsprozess auf der Grundlage einer vordefinierten Anzahl von Einstellungen basiert, die an einem oder mehreren Betriebsparametern vorgenommen wurden, und/oder auf der Grundlage eines oder mehrerer Betriebsparameter, die um mindestens einen vordefinierten Wert eingestellt wurden.

14. Verfahren nach einem der vorstehenden Ansprüche, weiter umfassend das periodische Neukalibrieren jeder der Chargen-Messeinheiten (30, 31, 32), wobei das Neukalibrieren jeder Chargen-Messeinheit (30, 31, 32) das Abgeben eines beliebigen Produkts in der Chargen-Messeinheit (30, 31, 32), das Verhindern, dass weiteres Produkt in die Chargen-Messeinheit (30, 31, 32) gelangt, das Neukalibrieren der Chargen-Messeinheit (30, 31, 32) und dann das Zulassen der Aufnahme von weiterem Produkt in die Chargen-Messeinheit (30, 31, 32) umfasst.

15. Verfahren nach einem der vorstehenden Ansprüche, wobei das System eine Computer-Kombinationswaage (CCW) ist, und/oder wobei das zugeführte Produkt ein Lebensmittelprodukt, vorzugsweise ein mit Aromastoffen überzogenes Lebensmittelprodukt ist.

## Revendications

1. Procédé d'identification d'un distributeur par dispersion défectueux (10, 15) dans un système adapté à l'alimentation en produit alimentaire depuis une position d'alimentation vers une pluralité d'unités de mesure de lot (30, 31, 32), le procédé comprenant :
l'alimentation en produit vers un distributeur par dispersion (10, 15) configuré pour recevoir un produit au niveau de la position d'alimentation et distribuer le produit vers chacune de la pluralité d'unités de mesure de lot (30, 31, 32) ;
le fonctionnement du distributeur par dispersion (10, 15) pour distribuer le produit vers chacune de la pluralité d'unités de mesure de lot (30, 31, 32) ;
la mesure de manière répétée de la quantité de produit au niveau du distributeur par dispersion (10, 15) en utilisant une unité de mesure de distributeur par dispersion (15) et l'alimentation en produit supplémentaire vers le distributeur par dispersion (10, 15) sur la base desdites mesures ;
la réception de produit dans au moins certaines de la pluralité d'unités de mesure de lot (30, 31, 32) ;
la mesure du produit reçu dans la pluralité d'unités de mesure de lot (30, 31, 32) ;
**caractérisé en ce que** le procédé comprend en outre :
la production en sortie d'une indication que le distributeur par dispersion (10, 15) est défectueux sur la base des mesures du produit reçu dans la pluralité d'unités de mesure de lot (30, 31, 32).

2. Procédé selon la revendication 1, dans lequel chaque unité de mesure de lot (30, 31, 32) reçoit un lot partiel de produit, et comprend en outre la formation d'un ou de plusieurs lots de produit selon des critères prédéfinis, de préférence selon des critères de poids prédéfinis,
dans lequel chaque lot de produit est formé par distribution d'une pluralité de lots partiels de produit sur la base des mesures du produit effectuées par les unités de mesure de lot (30, 31, 32) et desdits critères prédéfinis, et de préférence comprenant la formation d'une pluralité de lots de produit selon les critères prédéfinis,
dans lequel la production en sortie d'une indication que le distributeur par dispersion (10, 15) est défectueux est basée sur le taux auquel des lots sont formés pour répondre aux critères prédéfinis,
et en outre de préférence dans lequel chaque lot est formé selon des critères de poids prédéfinis,
et dans lequel la production en sortie d'une indication que le distributeur par dispersion (10, 15) est défectueux est basée sur le taux auquel des lots qui soit font partie soit excèdent une plage de poids cible sont formés.

3. Procédé selon la revendication 2, dans lequel la formation de chaque lot comprend l'identification d'une sélection de lots partiels de produit à distribuer sur la base des mesures du produit effectuées par les unités de mesure de lot (30, 31, 32) et desdits critères prédéfinis,
et dans lequel de préférence la production en sortie d'une indication que le distributeur par dispersion (10, 15) est défectueux est basée sur les caractéristiques de la sélection identifiée de lots partiels, telles que le nombre de lots partiels formant le lot de produit, pour un ou plusieurs lots de produit.

4. Procédé selon l'une quelconque des revendications 2 à 3, comprenant en outre, avant la formation de chaque lot, la détermination de savoir si un lot de produit doit être formé sur la base des mesures du produit reçu dans la pluralité d'unités de mesure de lot (30, 31, 32) et des critères prédéfinis, et la formation d'un lot uniquement après une détermination positive,
et dans lequel la production en sortie d'une indication que le distributeur par dispersion (10, 15) est défectueux est basée sur les résultats d'une pluralité de déterminations, dans lequel de préférence la production en sortie d'une indication que le distributeur par dispersion (10, 15) est défectueux est basée sur le taux de déterminations positives passant en dessous d'un seuil.

5. Procédé selon l'une quelconque des revendications 2 à 4, comprenant la formation d'un ou de plusieurs lots de produit selon des critères de poids prédéfinis, dans lequel lesdits critères de poids prédéfinis incluent un poids de lot cible minimal et/ou maximal de 100 grammes ou moins, de préférence 50 grammes ou moins, plus de préférence 30 grammes ou moins, de manière préférée entre toutes 20 grammes ou moins.

6. Procédé selon l'une quelconque des revendications précédentes, dans lequel l'unité de mesure de distributeur par dispersion (15) est une unité de pesage couplée au distributeur par dispersion (10, 15) et configurée pour mesurer le poids du produit au niveau du distributeur par dispersion (10, 15),
dans lequel de préférence l'alimentation en produit supplémentaire vers le distributeur par dispersion (10, 15) est basée sur le poids mesuré du produit au niveau du distributeur par dispersion passant en dessous d'un poids cible,
dans lequel de préférence ledit poids cible est 500 grammes ou moins, de préférence 200 grammes ou moins, plus de préférence 100 grammes ou moins, de manière préférée entre toutes 50 grammes ou moins.

7. Procédé selon l'une quelconque des revendications précédentes, dans lequel le distributeur par dispersion (10, 15) est une table de dispersion (10) configurée pour vibrer et/ou tourner de manière à distribuer le produit vers chacune de la pluralité d'unités de mesure de lot (30, 31, 32) ;
et/ou dans lequel le système comprend en outre une pluralité de distributeurs directionnels (11),
chacun étant configuré pour recevoir du produit depuis le distributeur par dispersion (10, 15) et transporter le produit vers au moins l'une des unités de mesure de lot (30, 31, 32),
dans lequel de préférence ladite pluralité de distributeurs directionnels (11) sont des distributeurs radiaux, de préférence des distributeurs radiaux vibrants.

8. Procédé selon l'une quelconque des revendications précédentes, comprenant en outre une trémie de rassemblement respective située entre le distributeur par dispersion (10, 15) et chaque unité de mesure de lot (30, 31, 32), ladite trémie de rassemblement (20, 21) étant agencée de manière à recevoir du produit depuis le distributeur par dispersion (10, 15) et distribuer le produit reçu dans l'unité de mesure de lot (30, 31, 32) respective ;
et/ou dans lequel chaque unité de mesure de lot (30, 31, 32) comprend une trémie (30), de préférence une trémie de pesage, configurée pour recevoir et maintenir un produit à mesurer et en outre configurée pour distribuer le produit reçu.

9. Procédé selon l'une quelconque des revendications précédentes, comprenant en outre l'ajustement d'un ou de plusieurs paramètres de fonctionnement du distributeur par dispersion (10, 15) en réponse à une indication que le distributeur par dispersion (10, 15) est défectueux,
dans lequel de préférence lesdits paramètres de fonctionnement incluent un ou plusieurs des paramètres suivants : une amplitude de vibration, une fréquence de vibration, un temps de vibration, une vitesse de rotation, un temps de rotation, et/ou un taux de changement de direction de rotation ;
et/ou de préférence lesdits paramètres de fonctionnement incluent une mesure cible, dans lequel l'alimentation en produit supplémentaire vers le distributeur par dispersion (10, 15) est basée sur lesdites mesures par l'unité de mesure de distributeur par dispersion (15) passant en dessous de la mesure cible, et comprenant en outre le changement de ladite mesure cible en réponse à une indication que le distributeur par dispersion (10, 15) est défectueux.

10. Procédé selon l'une quelconque des revendications précédentes, comprenant en outre, en réponse à une indication que le distributeur par dispersion (10, 15) est défectueux, la réalisation d'un processus de réétalonnage de distributeur par dispersion,
dans lequel le processus de réétalonnage de distributeur par dispersion comprend l'arrêt de l'alimentation en produit supplémentaire vers le distributeur par dispersion (10, 15), puis la poursuite du fonctionnement du distributeur par dispersion (10, 15) pour distribuer le produit vers chacune de la pluralité d'unités de mesure de lot (30, 31, 32), et puis le réétalonnage de l'unité de mesure de lot de distributeur par dispersion (15),
et comprenant en outre de préférence, après réétalonnage de l'unité de mesure de distributeur par dispersion (15), la reprise de l'alimentation en produit supplémentaire vers le distributeur par dispersion (10, 15) sur la base des mesures de l'unité de mesure de distributeur par dispersion (15) réétalonnée.

11. Procédé selon la revendication 10, comprenant en outre uniquement le réétalonnage de l'unité de mesure de distributeur par dispersion (15) une fois qu'un ou que plusieurs critères de réétalonnage sont respectés, dans lequel de préférence lesdits critères de réétalonnage comprennent :
une période de fonctionnement prédéfinie du distributeur par dispersion (10, 15) depuis que l'alimentation en produit a été arrêtée ; et/ou l'absence de changement des mesures de l'unité de mesure de distributeur par dispersion (15) dans une tolérance pendant une période prédéfinie.

12. Procédé selon la revendication 11 lorsqu'elle dépend d'au moins la revendication 2, dans lequel les critères de réétalonnage comprennent : un nombre prédéfini de lots formés ; chaque unité de mesure de lot (30, 31, 32) ayant contribué à un nombre prédéfini de lots formés ; et/ou chaque unité de mesure de lot (30, 31, 32) ayant mesuré une quantité totale prédéfinie de produit reçu depuis le distributeur par dispersion (10, 15).

13. Procédé selon l'une quelconque des revendications 10 à 12, dans lequel la réalisation du processus de réétalonnage de distributeur par dispersion est en outre basée sur un ou plusieurs paramètres de fonctionnement du distributeur par dispersion (10, 15), et de préférence comprend en outre l'ajustement d'un ou de plusieurs paramètres de fonctionnement du distributeur par dispersion (10, 15) en réponse à une indication que le distributeur par dispersion (10, 15) est défectueux, dans lequel la réalisation du processus de réétalonnage de distributeur par dispersion est en outre basée sur un ou plusieurs ajustements précédents des paramètres de fonctionnement,
dans lequel en outre de préférence le processus de réétalonnage est basé sur un nombre prédéfini d'ajustements ayant été effectués sur un ou plusieurs paramètres de fonctionnement et/ou est basé sur un ou plusieurs paramètres de fonctionnement ayant été ajustés d'au moins une quantité prédéfinie.

14. Procédé selon une quelconque revendication précédente, comprenant en outre l'étape consistant à réétalonner périodiquement chacune des unités de mesure de lot (30, 31, 32),
dans lequel l'étape de réétalonnage de chaque unité de mesure de lot (30, 31, 32) comprend les étapes consistant à distribuer un quelconque produit dans l'unité de mesure de lot (30, 31, 32), empêcher à plus de produit d'être reçu dans l'unité de mesure de lot (30, 31, 32), puis réétalonner l'unité de mesure de lot (30, 31, 32), et puis permettre à plus de produit d'être reçu dans l'unité de mesure de lot (30, 31, 32).

15. Procédé selon une quelconque revendication précédente, dans lequel le système est une balance combinée (CCW), et/ou dans lequel le produit alimenté est un produit alimentaire, de préférence un produit alimentaire enrobé et aromatisé.
